(19) **Europäisches Patentamt**

**European Patent Office**

**Office européen des brevets**

(11) **EP 1 643 660 A1**

(12) **EUROPEAN PATENT APPLICATION**

(43) Date of publication:
**05.04.2006 Bulletin 2006/14**

(51) Int Cl.:
*H04B 7/04* (2006.01)          *H04L 25/02* (2006.01)
*H04L 27/26* (2006.01)

(21) Application number: **05017839.1**

(22) Date of filing: **17.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.09.2004 CN 200410066877**

(71) Applicant: **ALCATEL**
**75008 Paris (FR)**

(72) Inventors:
• **Dong, Li**
**Pudong Jinqiao,**
**201206 Shanghai (CN)**
• **Hongwei, Yang**
**Pudong Jinqiao,**
**201206 Shanghai (CN)**
• **Linan, Tao**
**Pudong Jinqiao,**
**201206 Shanghai (CN)**

(74) Representative: **Dreiss, Fuhlendorf, Steimle & Becker**
**Patentanwälte**
**Postfach 10 37 62**
**70032 Stuttgart (DE)**

(54) **Multiple input multiple output orthogonal frequency division multiplexing mobile communication system and channel estimation method**

(57) The present invention provides a channel estimation method for a Multiple Input Multiple Output Orthogonal Frequency Division Multiplexing system, characterized by comprising steps of: for each of a plurality of receiving antennas of said Orthogonal Frequency Division Multiplexing system, calculating a channel impulse response sequence and a channel frequency response sequence for a channel between said receiving antenna and each transmitting antenna by using a pilot sequence received by said receiving antenna; wherein said pilot sequence is a comb pilot sequence, and the pilot symbols, to which each of said transmitting antennas corresponds, are located in the same position in frequency domain and separated from one another in time domain. The present invention further provides a corresponding mobile communication system. The pilot sequence of the present invention may be used in a wireless channel with a relatively high moving speed. The present invention considers the impact of virtual sub-carriers in a Multiple Input Multiple Output Orthogonal Frequency Division Multiplexing system, and possesses relatively high performance and relatively low complexity.

Fig. 2

EP 1 643 660 A1

**Description**

FIELD OF THE INVENTION

The present invention generally relates to wireless communication, and more particularly, to a Multiple Input Multiple Output Orthogonal Frequency Division Multiplexing (MIMO-OFDM) system and a channel estimation method thereof.

BACKGROUND OF THE INVENTION

It is generally deemed that in order to obtain a relatively high data transmission rate in a mobile environment, future mobile communication systems will adopt the orthogonal frequency division multiplexing (OFDM) technique which has many advantages such as anti-multipath fade and high spectrum efficiency. A multiple input multiple output (MIMO) system with very high spectrum efficiency is able to obtain higher transmission efficiency by raising its complexity without increasing bandwidth. In order to get better performance, coherent detection is usually employed in a MIMO-OFDM system. Coherent detection has to rely on channel estimation for the amplitude and phase information of channel frequency response. Channel estimation of a MIMO-OFDM system is of vital importance to the system performance and is a difficult problem at the same time.

Main limitations in the current pilot designed for performing channel estimation in a MIMO-OFDM system lie in their complex calculation and difficulty of being applied to a dynamic varying environment with a relatively high moving speed.

A channel estimation algorithm based on a block pilot structure MIMO-OFDM was disclosed in 1999 by Ye (Geoffrey) Li, Nambirajan Seshadri and Sirikiat Ariyavisitakul in a paper entitled "Channel Estimation for OFDM System with Transmitter Diversity in Mobile Wireless Channels", IEEE J. Select. Areas Commun., vol. 17, pp.461-470, Mar. 1999. However, since the block pilot structure is usually adapted to slowly-varying wireless channels, this approach fails to satisfy practical applications in fast-varying dynamic wireless channels. Moreover, this approach does not take into consideration virtual sub-carriers in OFDM systems. Typically, practical OFDM systems are often provided with virtual sub-carriers. Therefore, the applying range and using conditions of this approach are very limited.

A channel estimation algorithm for space time block code (STBC) based orthogonal frequency division multiplexing (OFDM) systems was disclosed by Jianxin Guo, Daming Wang and Chongsen Ran in a paper entitled "Simple channel estimator for STBC-based OFDM systems", Electrical letters, vol. 39, No.5, Mar. 2003. In this approach, the transmitter does not require receivers to feed back channel state information, there is no bandwidth extension, coding is simple, and it can achieve comparatively high diversity gain on the premise of not losing the transmission rate. However, since this approach is assumed that the channel conditions corresponding to two consecutive OFDM symbols do not change, it is also merely suitable for slowly-varying wireless channels. However, in fast-varying dynamic wireless channels, the performance of this algorithm will be greatly impaired.

Other references, such as "Simplified Channel Estimation for OFDM Systems with Multiple Transmit Antennae" Ye (Geoffrey) Li, ", IEEE trans. Wireless Commun., vol.1, pp.67-75 , Jan. 2002 and "A Reduced Complexity Channel Estimation for OFDM Systems with Transmit Diversity in Mobile Wireless Channels" Hlaing Minn, Dong In Kim, Vijay K. Bhargava, IEEE Trans. Commun. Vol. 50, pp.799-807, May 2002, also delve into channel estimation approaches for MIMO-OFDM systems. However, the above-mentioned problems are still not settled in all these approaches.

Therefore, it is necessary to provide a pilot and corresponding channel estimation method and apparatus for a MIMO-OFDM system provided with virtual sub-carriers, so that the system can operate in a fast-varying dynamic wireless channel environment.

SUMMARY OF THE INVENTION

It is an object of the present invention to solve the aforesaid technical problems in the prior art and to provide a Multiple Input Multiple Output Orthogonal Frequency Division Multiplexing mobile communication system and a channel estimation method thereof.

To this end, the present invention provides a channel estimation method for a Multiple Input Multiple Output Orthogonal Frequency Division Multiplexing system, characterized by comprising steps of:

for each of a plurality of receiving antennas of said Orthogonal Frequency Division Multiplexing system, calculating a channel impulse response sequence and a channel frequency response sequence for a channel between said receiving antenna and each of transmitting antennas by using a pilot sequence received by said receiving antenna; wherein said pilot sequence is a comb pilot sequence, and the pilot symbols, to which each of said transmitting antennas corresponds, are located in the same position in frequency domain and separated from one another in time domain.

The present invention further provides a Multiple Input Multiple Output Orthogonal Frequency Division Multiplexing mobile communication system, said system comprising encoding means, pilot sequence generating means and a plurality of transmitting antennas at transmitting end, and comprising a plurality of receiving antennas, channel estimation means and decoding means at receiving end, wherein said transmitting antennas simultaneously transmit signals with pilot sequences, and said signals, after received by said receiving antennae, are decoded by the decoding means based on a channel estimation result generated by the channel estimation means, characterized in that said channel estimation means, for each receiving antenna in said plurality of receiving antennas, calculates a channel impulse response sequence and a channel frequency response sequence for a channel between said receiving antenna and each of the transmitting antennas by using a pilot sequence received by said receiving antenna; wherein said pilot sequence is a comb pilot sequence, and the pilot symbols, to which each of said transmitting antennas corresponds, are located in the same position in frequency domain and separated from one another in time domain.

The pilot symbols of the pilot sequences used in the present invention for all antennas are located in the same position in frequency domain. As a result, the complexity of framing Orthogonal Frequency Division Multiplexing symbols of multiple antennas is simplified. Therefore, only one pilot sequence generating means is required for the corresponding mobile communication system. The equipment complexity is further reduced by using the output of the means, which has been phase rotated, and used as the pilot sequence of each of the transmitting antennas. The channel estimation method based on the above-described pilot sequence is able to be used in fast-varying dynamic wireless channels and its design takes into consideration the impact of virtual sub-carriers so as to meet the requirements of a practical Multiple Input Multiple Output Orthogonal Frequency Division Multiplexing system.

Other features and advantages of the present invention will become more apparent after reading of the detailed description of embodiments of the present invention, taken in conjunction with the accompanying drawings.

BRIEF DESCRIPTION OF THE DRAWINGS

Fig. 1 is a schematic structural view of an MIMO-OFDM system with M transmitters and N receivers according to an embodiment of the present invention;
Fig. 2 is a schematic flow chart of a channel estimation method according to an embodiment of the present invention; and
Fig. 3 illustrates a performance comparison between an embodiment of the present invention and a channel estimation algorithm for a space time block code (STBC) based MIMO-OFDM system.

DESCRIPTION OF THE PREFERRED EMBODIMENTS

Hereinafter, the embodiments of the present invention will be described in detail with reference to the accompanying drawings.

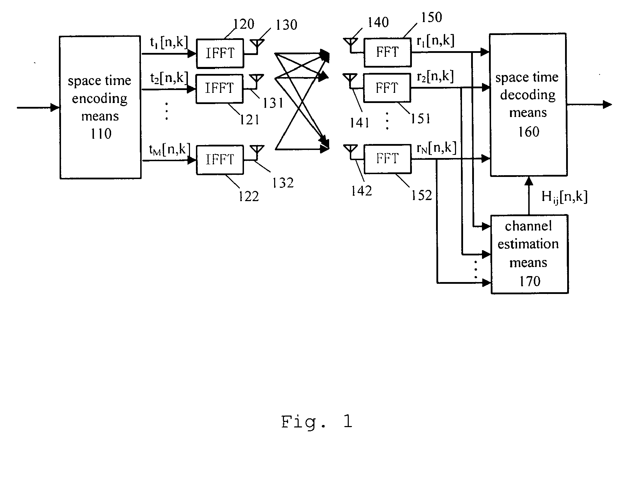

Fig. 1 is a schematic structural view of a MIMO-OFDM system with M transmitters and N receivers according to an embodiment of the present invention.

In Fig. 1, at transmitting end, numeral 110 denotes space time encoding means, numerals 120-122 schematically denote M inverse fast Fourier transformers (IFFT) at transmitting end, and numerals 130-132 schematically denote transmitting antennas corresponding to the IFFTs. In receiving end, numerals 140-142 schematically denote N receiving antennas at receiving end, numerals 150-152 schematically denote N fast Fourier transformers (FFT) each of which is connected with one of the receiving antennas respectively, numeral 160 denotes space time decoding means, and numeral 170 denotes channel estimation means.

As shown in Fig. 1, input data is encoded by the space time encoding means 110 and then is divided into M sub-data streams $t_i$ [n,k], i=1, 2, ..., M, wherein n represents the serial number of an OFDM symbol, k=0, 1, 2, ..., FFT_Size-1 (FFT_Size represents the number of sub-carriers of each OFDM symbol, i.e. the total number of frequency points of an IFFT transform). The IFFT 120-122 perform inverse fast Fourier transforms on the corresponding sub-data streams respectively and then transmit the data via the M transmitting antennas 130-132. The data is transmitted in parallel by the M transmitting antennas 130-132 and then arrives at the N receiving antennas 140-142 at receiving end via a MIMO channel. It should be noted that each of the receiving antennas 140-142 can receive all the transmitting signals. That is to say, the receiving antenna 140 receives all the data transmitted by the transmitting antennas 130-132, so do the receiving antennas 141-142. Having been Fourier transformed by the FFTs 150-152, the received data signals are denoted respectively as $r_j$ [n,k], wherein j=1, 2, ..., N. Each $r_j$ [n, k] is inputted both to the space time decoding means 160 and to the channel estimation means 170. Based on the channel frequency response $H_{ij}$ [n,k] estimated by the channel estimation means 170, the space time decoding means 160 decodes each $r_j[n,k]$.

The receiving signal $r_j[n,k]$ that has been performed an Fourier transform may be expressed as

$$r_j[n,k] = \sum_{i=1}^{M} H_{ij}[n,k] \cdot t_i[n,k] + w_j[n,k] \ , \quad j = 1, 2, ..., N \qquad (1)$$

wherein $H_{ij}[n,k]$ represents the channel frequency response from the $i$th of the transmitting antennas 130-132 to the $j$th of the receiving antennas 140-142 in the $k$th sub-carrier at the time of the $n$th OFDM symbol, and $w_j[n,k]$ represents additive white Gaussian noise.

To describe the embodiments of the present invention in a more convenient way, parameters used infra are explained firstly:

FTT_Size: the length of a fast Fourier transform (FFT)/inverse fast Fourier transform (IFFT), which is generally an integral order of 2, e.g. 1024;

Pilot_Interval: the frequency domain interval of a comb pilot, which is generally an integral order of 2, e.g. 8;

SMP_Num: the number of pilot samples, in which
SMP_Num=FFT_Size/Pilot_Interval ,

Pilot_Index: the index set of FFT frequency points of an inserted pilot of every OFDM symbol, e.g. {k| k=i*Pilot_ Interval and $k_{\notin}$VSC_Range, in which k=0, 1, ..., SMP_Num-1};

VPilot_Index: the index set of FFT frequency points of a virtual pilot (i.e. zero-power pilot in a sub-carrier) of every OFDM symbol, e.g. {k| k=i*Pilot_Interval and $k_{\in}$VSC_Range, in which , k=0, 1, ..., SMP_Num-1} ;

Pilot_Num: the total number of inserted pilots of every OFDM symbol, i.e. the number of elements in the Pilot_Index set;

Pilot_Module: the module value of a pilot sequence inserted by the first antenna (the pilot sequence is a pilot sequence with constant module value);

VSC_Num: the number of virtual sub-carriers in every OFDM symbol, which is generally an odd number;

VSC_Range: the range of fast Fourier transform frequency points for a virtual sub-carrier, i.e. {FFT_Size/2-(VSC_Num-1)/2 ,..., FFT_Size/2+(VSC Num-1)/2};

Wave_Length: the wave width caused by the virtual sub-carriers, as shown in equations (2a) and (2b);

Wave_Num: the number of waves selected for interpolation of a fast Fourier transform, wherein this parameter is a configured parameter in the present invention and generally ranges from 1 to 5;

Max_Delay: the maximum delay of multipath channel measured with system sampling time.

The value of the above parameter Wave_Length is determined by the following formulae, wherein in formula (2b), the width of the wave Wave_Length is expressed by using sequence u(n) defined in formula (2a), abs() in formula (2a) denotes a function for getting a module value and min() in formula (2b) denotes a function for getting a minimum value,

$$abs(u(n)) = \left| \frac{\sin(\pi n Pilot\_Num / SMP\_Num)}{\sin(\pi n / SMP\_Num)} \right| \ , \qquad n = 0,1..., SMP\_Num - 1$$

$$(2a)$$

$$Wave\_Length = \min_{n}\{\arg(abs(u(n)) < \min(abs(u(n-1)), abs(u(n+1))))\}$$

$$(2b)$$

Table 1 lists values of the wave width under several system parameter configurations.

Table 1: Value of wave width in system parameter configurations

| SMP_Num | Pilot_Num | Wave_Length |
|---------|-----------|-------------|
| 256 | 231 | 10 |
| 256 | 225 | 8 |
| 128 | 113 | 9 |
| 128 | 103 | 5 |

In order to completely obtain a channel impulse response (CIR) of the wireless channel corresponding to every pair of receiving and transmitting antennas during channel estimation and therefore obtain an estimation of the channel frequency response (CFR) of the wireless channel, the following condition shall be met:

$$SMP\_Num / M > Max\_Delay + Wave\_Num * Wave\_Length \qquad (3)$$

wherein Wave_Num is the parameter required for the channel estimation algorithm of the present invention as defined above, which generally ranges from 1 to 5, and the wave width Wave_Length is as shown in formula (2b). When the maximum delay Max_Delay of the wireless channel is relatively large, the condition shown in formula (3) can be met by setting a smaller frequency domain pilot interval; when the maximum delay Max_Delay of the wireless channel is relatively small, the condition shown in formula (3) can be met by setting a larger frequency domain pilot interval and reducing the pilot overhead.

A channel estimation method for MIMO-OFDM is based on a concrete design of a pilot sequence. In an embodiment of the present invention, a comb pilot designing for fast-varying dynamic wireless channels is first provided.

Specifically, the pilot sequence of the first antenna (i.e., i = 1) can be defined as a symbol sequence with a module Pilot_Module , e.g. a complex pseudo random sequence (PN) with a module Pilot_Module; the pilot sequence of the antenna i (i = 2, ..., m) is defined as:

$$t_i[n,k] = t_1[n,k] \cdot \exp(-j2\pi k \cdot (i-1)/M / Pilot\_Interval), \quad k \in \texttt{Pilot\_Index} \quad (4)$$

$$t_i[n,k] = 0, \quad k \in \texttt{VPilot\_Index} \qquad (5)$$

wherein j in formula (4) is a unit imaginary number. Phase rotation is performed on the pilot sequences of the different antennas. The phase rotation may cause the pilot symbols superimposed in frequency domain to be separated from one another in time domain, so that parameter estimation can be performed on the channel between each pair of receiving and transmitting antennas.

In this design, the above-mentioned pilot not only considers the impact of fast-varying dynamic radio channels but also effectively reduces the complexity of the system by means of its own characteristics. Since the pilot symbols of the respective antennas are located in the same frequency domain position, the complexity of framing OFDM symbols for multiple antennas is simplified. Moreover, only one pilot sequence generating means is required in transmitting end, and the complexity of the equipment is further reduced by using the output of the pilot sequence generating means, which has been phase-rotated, as the pilot sequences respectively for the antennas.

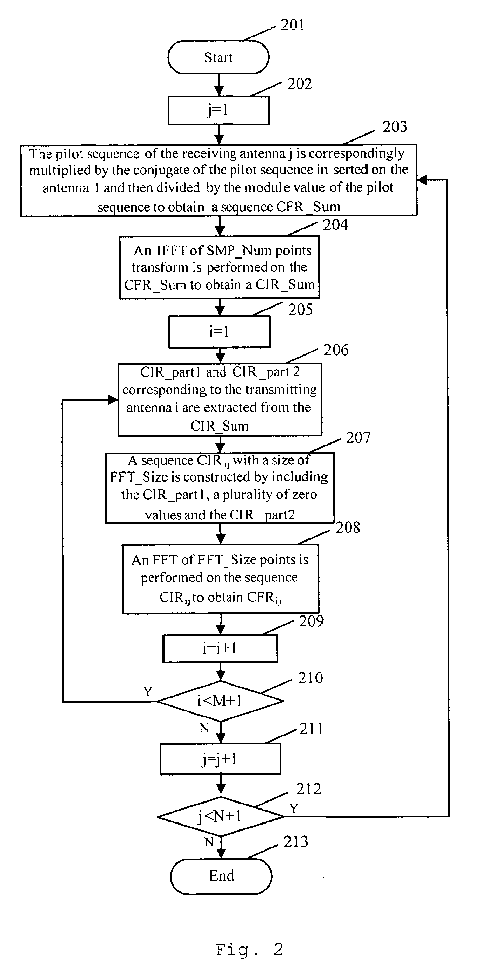

Fig. 2 is a schematic flow chart of a channel estimation algorithm according to an embodiment of the present invention. Referring to Fig. 2, an estimation algorithm for $H_{ij}[n,k]$ is provided in detail on the basis of the pilot sequence for a MIMO-OFDM system as described above, wherein i denotes the $i^{th}$ transmitting antenna, i=1, 2, ..., M; and j denotes the $j^{th}$ receiving antenna, j=1, 2, ..., N; k denotes the $k^{th}$ sub-carrier, k=0, 1, ..., FFT_Size-1 .

In step 201, channel estimation is started.

In step 202, the index of the receiving antenna is initialized as 1, i.e., j = 1.

In step 203, the channel frequency response and sequence CFR_Sum are calculated. The received pilot sequence of the receiving antenna j is correspondingly multiplied by the conjugate sequence of the transmitted pilot sequence of the transmitting antenna 1 and then divided by the constant Pilot_Module, as shown in formula (6):

$$CFR\_Sum = r_j[n,k] \cdot (t_1[n,k])^* / Pilot\_Module \quad ,$$

$$k \in Pilot\_Index \ U \ VPilot\_Index \quad (6)$$

wherein the symbol "U" stands for overlapping union operation of sets, and the symbol "*" stands for conjugate operation.

In step 204, a channel impulse response and sequence are calculated based on the sequence CFR_Sum. An IFFT transform of SMP_Num points is performed on the sequence CFR_Sum to obtain a sequence CIR_Sum, i.e.,

$$CIR\_Sum = IFFT_{SMP\_Sum}(CFR\_Sum) \quad (7)$$

In step 205, the index of the transmitting antenna is initialized as 1, i.e., i = 1.

In step 206, the [(i-1)$\times$ SMP_Num/M]-th to the [i$\times$SMP_Num/M-Wave_NumxWave_Length-1]-th elements are extracted from the sequence CIR_Sum and denoted as CIR_part1. The P1-th to the P2-th elements are extracted from the CIR_Sum and denoted as CIR_Part2. Values of P1 and P2 are calculated as shown in formulae (8) and (9):

$$P1 = [(i-1) \cdot \frac{SMP\_Num}{M} - Wave\_Num \cdot Wave\_Length + SMP\_Num] \% SMP\_Num \quad (8)$$

$$P2 = [(i-1) \cdot \frac{SMP\_Num}{M} - 1 + SMP\_Num] \% SMP\_Num \quad (9)$$

wherein the symbol "%"is a MOD operator.

In step 207, a new sequence called CIR$_{ij}$ is constructed by including the CIR_part1 extracted in step 206, FFT_Size-SMP_Num/M zero data, and the CIR_part2 extracted in step 206.

In step 208, an FFT transform of FFT_Size points is performed on the sequence CIR$_{ij}$ and its result is denoted as CFR$_{ij}$, i.e. the channel estimation result of the frequency response of the channel between the transmitting antenna i and the receiving antenna j.

In step 209, the index i of the transmitting antenna is increased by 1.

In step 210, it is decided whether i is less than M+1. That is, whether or not the channel estimation has been applied to all the transmitting antennas is decided. If the decision result is "yes", then the flow goes to step 206; otherwise, the flow proceeds to step 211.

In step 211, the index j of the receiving antenna is increased by 1.

In step 212, it is decided whether j is less than N+1. That is, whether or not the channel estimation has been applied to all the receiving antennas is decided. If the decision result is "yes", then the flow goes to step 203; otherwise, the flow proceeds to step 213.

In step 213, the channel estimation is ended and the CFR$_{ij}$, i=1,2,...,M, j=1,2,...,N is the final result.

In order to describe the embodiments of the channel estimation method of the present invention in a clearer way, the advantages of the present invention are further explained based on a specific example of the above flow as well as a comparison simulation of this example and the channel estimation method for a STBC MIMO-OFDM system.

System parameters of this example are set as shown in table 2.

Table 2: Parameter setting in an example of the channel estimation method of the present invention

| Parameter | Value |
|---|---|
| M | 2 |
| N | 2 |
| FFT_Size | 1024 |

Table continued

| Parameter | Value |
|---|---|
| Pilot_Interval | 4 |
| SMP_Num | 256 |
| Pilot_Index | {0,4,8,...,448, 576, 580,..., 1020} |
| VPilot_Index | {452,456,...,572} |
| Pilot-Num | 225 |
| VSC_Num | 127 |
| VSC_Range | {449,450,...,575} |
| Wave_Length | 8 (as shown Table 1) |
| Wave_Num | 5 |
| Max_Delay | 26, adopting universal mobile telecommunication system vehicle channel A(UMTS Vehicle A channel) model and assuming the sample frequency is 10.24 MHz |

According to formula (3), due to 256/2>26+5*8, this exemplary system satisfies requirements for completely obtaining CIR of wireless channel for every pair of receiving and transmitting antennas and thus obtaining a final estimation result of CFR of the wireless channel during a channel estimation.

The pilot of the first transmitting antenna, i.e. i = 1, may be:

$$t_1[n,k] = 1, \quad \text{k} \in \text{Pilot\_Index}$$

$$t_1[n,k] = 0, \quad \text{k} \in \text{VPilot\_Index}$$

The pilot of the second transmitting antenna, i.e. i = 2, may be:

$$t_2[n,k] = t_1[n,k] \cdot \exp(-j\pi k/4), \quad \text{k} \in \text{Pilot\_Index U VPilot\_Index}$$

Based on the flow chart shown in Fig. 2, the specifc flow of this example is as follows.

In step 201, channel estimation is started.

In step 202, the index of the receiving antenna is initialized as 1, i.e., j = 1.

In step 203, the channel frequency response and sequence CFR_Sum are calculated. The received pilot sequence of the receiving antenna j is correspondingly multiplied by the conjugate sequence of the transmitted pilot sequence of the first transmitting antenna (i.e. i=1), as shown in the following formula:

$$CFR\_Sum = r_j[n,k] \cdot (t_1[n,k])^*, \text{k} \in \text{Pilot\_Index U VPilot\_Index}$$

wherein the symbol "U" stands for overlapping union operation of sets, and the symbol "*" stands for conjugate operation.

In step 204, a channel impulse response and sequence are calculated based on the sequence CFR_Sum. An IFFT transform of 256 points is performed on the sequence CFR_Sum to obtain a sequence CIR_Sum, i.e.,

$$CIR\_Sum = IFFT_{256}(CFR\_Sum)$$

In step 205, the index of the transmitting antenna is initialized as 1, i.e., i = 1.

In step 206, the [(i-1)$\times$256/2]-th to the [ix256/2-5x8-1]-th elements are extracted from the sequence CIR_Sum and denoted as CIR_part1. The {[ (i-1)$\times$256/2-5+256]%256}-th to the {[(i-1)x256/2-1+256]%256}-th elements are extracted from the CIR_Sum and denoted as CIR_Part2, where the symbol "%"is a MOD operator.

In step 207, a new 1024-point sequence called CIR$_{ij}$ is constructed by including the CIR_part1 extracted in step 206, 1024 - 256/2=896 zero data, and the CIR_part2 extracted in step 206.

In step 208, an FFT transform of 1024 points is performed on the sequence CIR$_{ij}$ and its result is denoted as CFR$_{ij}$ i.e. the channel estimation result of the frequency response of the channel between the transmitting antenna i and the receiving antenna j.

In step 209, the index i of the transmitting antenna is increased by 1.

In step 210, it is decided whether i is less than 3. That is, whether or not the channel estimation has been applied to all the transmitting antennas is decided. If the decision result is "yes", then the flow goes to step 206; otherwise, the flow proceeds to step 211.

In step 211, the index j of the receiving antenna is increased by 1.

In step 212, it is decided whether j is less than 3. That is, whether or not channel estimation has been applied to all the receiving antennas is decided. If the decision result is "yes", then the flow goes to step 203; otherwise, the flow proceeds to step 213.

In step 213, the channel estimation is ended and the CFR$_{ij}$, i=1,2,...,M, j=1,2,...,N is the final result.

In order to further explain the advantages of the pilot and the channel estimation method of the present invention, a performance comparison of the present invention and the STBC based channel estimation algorithm is made through simulation. Some simulation parameters are shown in table 3.

Table 3 Parameters of a comparison simulation between the channel estimation method of the present invention and the STBC channel estimation method

| Parameter | Value |
|---|---|
| sample frequency | 10.24MHz |
| UMTS Vehicle A channel parameters | delay ={0, 310, 710, 1090, 1730, 2510}ns average power= {0, -1, -9, -10, -15, -20}dB |
| rate of mobile transmission | 60kmph 60kmph |
| pilot interval of the STBC channel estimation algorithm | 4 |

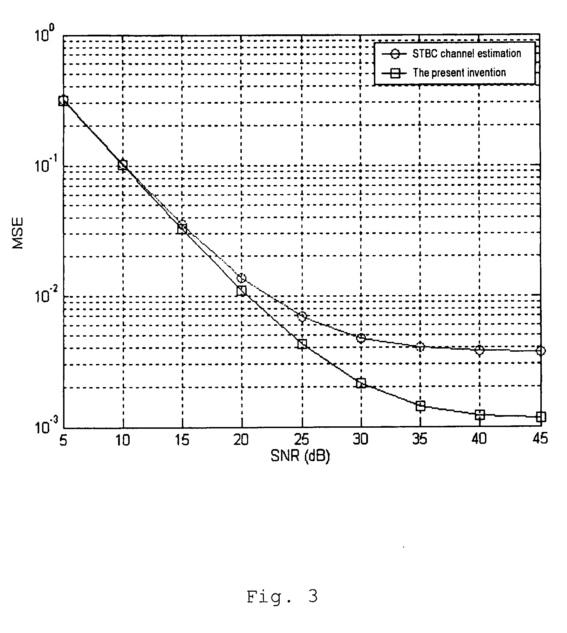

Fig. 3 illustrates a performance comparison between an embodiment of the present invention and a channel estimation algorithm for a space time block code (STBC) based MIMO-OFDM system.

As shown in Fig. 3, the abscissa stands for receiving signal-to-noise ratio, and the ordinate stands for Mean Square Error. With the increase of the receiving signal-to-noise ratio, the Square Mean Error of the embodiment of the present invention is gradually lower than the Square Mean Error of the channel estimation algorithm based on the STBC technology. When the receiving signal-to-noise ratio is greater than 25dB, this advantage becomes very apparent. Furthermore, since the present invention takes the impact of virtual sub-carriers into consideration, the channel estimation of the present invention has more practical significance than the channel estimation algorithm for an STBC-based MIMO-OFDM system.

Although the embodiments of the present invention have been described with reference to the accompanying drawings, various alterations or modifications can be made by those skilled in the art without departing from the scope of the appended claims.

**Claims**

**1.** A channel estimation method for a Multiple Input Multiple Output Orthogonal Frequency Division Multiplexing system, **characterized by** comprising steps of:

for each of a plurality of receiving antennas of said Orthogonal Frequency Division Multiplexing system, calculating a channel impulse response sequence and a channel frequency response sequence for a channel between said receiving antenna and each transmitting antenna by using a pilot sequence received by said receiving antenna;

wherein said pilot sequence is a comb pilot sequence, and the pilot symbols, to which each of said transmitting antennas corresponds, are located in the same position in frequency domain and separated from one another in time domain.

2. The channel estimation method according to claim 1, **characterized in that** phase rotation is present among said pilot symbols.

3. The channel estimation method according to claim 1, **characterized in that** the pilot sequence of the first transmitting antenna of said Multiple Input Multiple Output Orthogonal Frequency Division Multiplexing system is a complex pseudo random sequence with a constant module.

4. The channel estimation method according to claim 1, **characterized in that** said step of calculating the channel impulse response sequence and the channel frequency response sequence comprises steps of:

calculating the channel frequency response and sequence of said receiving antenna by using said pilot sequence received by said receiving antenna;

performing an Inverse Fast Fourier Transform on said channel frequency response and sequence to obtain the channel impulse response and sequence of said receiving antenna, wherein the number of points for said Inverse Fast Fourier Transform is the number of samples for said pilot;

for each transmitting antenna, extracting from the channel impulse response and sequence of said receiving antenna a first part sequence and a second part sequence corresponding to said transmitting antenna, inserting a plurality of zero values between said first part sequence and said second part sequence so as to obtain a channel impulse response sequence of the wireless channel between said transmitting antenna and said receiving antenna, and performing a Fast Fourier Transform on said channel impulse response sequence so as to obtain a channel frequency response of the wireless channel between said transmitting antenna and said receiving antenna, wherein the length of said channel impulse response sequence is the length of the Fast Fourier Transform/Inverse Fast Fourier Transform.

5. The channel estimation method according to claim 4, **characterized in that** said first part sequence is calculated according to the following formula:

$$P1 = [(i-1) \cdot \frac{SMP\_Num}{M} - Wave\_Num \cdot Wave\_Length + SMP\_Num] \% SMP\_Num$$

and said second part sequence is calculated according to the following formula:

$$P2 = [(i-1) \cdot \frac{SMP\_Num}{M} - 1 + SMP\_Num] \% SMP\_Num$$

wherein Wave_Length is the wave width caused by virtual sub-carriers, Wave_Num is the number of the waves which is considered in an interpolation of a Fast Fourier Transform, SMP_Num is the number of samples for the pilot, and the symbol "%" is a MOD operator.

6. The channel estimation method according to claim 5, **characterized in that** said wave width Wave_Length is calculated according to following formulas:

$$abs(u(n)) = \left| \frac{\sin(\pi n Pilot\_Num / SMP\_Num)}{\sin(\pi n / SMP\_Num)} \right| , \qquad n = 0,1..., SMP\_Num - 1$$

$$Wave\_Length = \min_{n}\{\arg(abs(u(n)) < \min(abs(u(n-1)), abs(u(n+1))))\}$$

wherein Pilot_Num is the sum of pilots interpolated to each OFDM symbol.

7. A Multiple Input Multiple Output Orthogonal Frequency Division Multiplexing mobile communication system, said system comprising encoding means, pilot sequence generating means and a plurality of transmitting antennas at transmitting end, and comprising a plurality of receiving antennas, channel estimation means and decoding means at receiving end, wherein said transmitting antennas simultaneously transmit signals carrying pilot sequences, and said signals, after received by said receiving antennas, are decoded by the decoding means based on a channel estimation result generated by the channel estimation means, **characterized in that** said channel estimation means, for each receiving antenna in said plurality of receiving antennas, calculates a channel impulse response sequence and a channel frequency response sequence for a channel between said receiving antenna and each transmitting antenna, by using a pilot sequence received by said receiving antenna; wherein said pilot sequence is a comb pilot sequence, and the pilot symbols, to which each of said transmitting antennas corresponds, are located in the same position in frequency domain and separated from one another in time domain.

8. The mobile communication system according to claim 7, **characterized by** further comprising a phase rotation means, for performing a phase rotation on the pilot sequences located in the same position in frequency domain and providing the phase-rotated pilot sequences respectively to said transmitting antennas as their pilot sequences.

9. The mobile communication system according to claim 7, **characterized in that** the pilot sequence of the first transmitting antenna in said plurality of transmitting antennas is a complex pseudo random sequence with a constant module.

10. The mobile communication system according to claim 7, **characterized in that** said channel estimation means comprises:

means for calculating the channel frequency response and sequence of said receiving antenna by using said pilot sequence received by said receiving antenna;
means for performing an Inverse Fast Fourier Transform to said channel frequency response and sequence to obtain the channel impulse response and sequence of said receiving antenna, wherein the number of points for said Inverse Fast Fourier Transform is the number of samples for said pilot;
means for calculating a channel impulse response sequence, wherein for each transmitting antenna, a first part sequence and a second part sequence corresponding to said transmitting antenna are extracted from the channel impulse response and sequence of said receiving antenna, and a plurality of zero values are inserted between said first part sequence and said second part sequence so as to obtain the channel impulse response sequence of the wireless channel between said transmitting antenna and said receiving antenna, wherein the length of said channel impulse response sequence is the length of the Fast Fourier Transform/Inverse Fast Fourier Transform; and
means for performing a Fast Fourier Transform on said channel impulse response sequence so as to obtain the channel frequency response of the wireless channel between said transmitting antenna and said receiving antenna.

11. The mobile communication system according to claim 10, **characterized in that** said fist part sequence is calculated according to following formula:

$$P1 = [(i-1)\cdot\frac{SMP\_Num}{M} - Wave\_Num \cdot Wave\_Length + SMP\_Num]\,\%\,SMP\_Num$$

said second part sequence is calculated according to following formula:

$$P2 = [(i-1) \cdot \frac{SMP\_Num}{M} - 1 + SMP\_Num\,]\,\%\,SMP\_Num$$

wherein Wave_Length is the wave width caused by virtual sub-carriers, Wave_Num is the number of the waves which is considered in an interpolation of a Fast Fourier Transform, SMP_Num is the number of samples for the pilot, and the symbol "%"is a MOD operator.

**12.** The mobile communication system according to claim 11, **characterized in that** said wave width Wave_Length is calculated according to following formulas:

$$abs(u(n)) = \left| \frac{\sin(\pi n Pilot\_Num / SMP\_Num)}{\sin(\pi n / SMP\_Num)} \right| \quad , \qquad n = 0,1..., SMP\_Num - 1$$

$$Wave\_Length = \min_{n}\{\arg(abs(u(n)) < \min(abs(u(n-1)), abs(u(n+1))))\}$$

wherein Pilot_Num is the sum of pilots interpolated by each OFDM symbol.

Fig. 1

201

Start

202

j=1

203

The pilot sequence of the receiving antenna j is correspondingly multiplied by the conjugate of the pilot sequence in serted on the antenna 1 and then divided by the module value of the pilot sequence to obtain a sequence CFR_Sum

204

An IFFT of SMP_Num points transform is performed on the CFR_Sum to obtain a CIR_Sum

205

i=1

206

CIR_part1 and CIR_part 2 corresponding to the transmitting antenna i are extracted from the CIR_Sum

207

A sequence $CIR_{ij}$ with a size of FFT_Size is constructed by including the CIR_part1, a plurality of zero values and the CIR_part2

208

An FFT of FFT_Size points is performed on the sequence $CIR_{ij}$ to obtain $CFR_{ij}$

209

i=i+1

210

Y    i<M+1

N

211

j=j+1

212

j<N+1    Y

N

213

End

Fig. 2

Fig. 3

**EP 1 643 660 A1**

European Patent
Office

**EUROPEAN SEARCH REPORT**

Application Number

EP 05 01 7839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MYEONGCHEOL SHIN ET AL: "A new training symbol structure to enhance the performance of channel estimation for MIMO-OFDM systems" IEEE INTERNATIONAL CONFERENCE ON ACOUSTICS, SPEECH, AND SIGNAL PROCESSING (ICASSP), NEW YORK, NY: IEEE, US, vol. 1, 6 April 2003 (2003-04-06), pages IV397-IV400, XP010641180 ISBN: 0-7803-7663-3 * abstract; figure 1 * | 1,7 | H04B7/04 H04L25/02 H04L27/26 |
| Y | sections 2,3,4 | 2-6,8-12 | |
| Y | LI, Y.: "Simplified channel estimation for OFDM systems with multiple transmit antennas" IEEE TRANSACTIONS ON WIRELESS COMMUNICATIONS, IEEE SERVICE CENTER, PISCATAWAY, NJ, US, vol. 1, no. 1, January 2002 (2002-01), pages 67-75, XP001143806 ISSN: 1536-1276 sections 3,4 | 2-6,8-12 | |
| A | * abstract; figures 1,3 * | 1,7 | |
| Y | JONES, V.K.; RALEIGH, G.G.: "Channel estimation for wireless OFDM systems" IEEE GLOBAL TELECOMMUNICATIONS CONFERENCE (GLOBECOM '98), NEW YORK, NY: IEEE, US, vol. 2, 8 November 1998 (1998-11-08), pages 980-985, XP000825895 ISBN: 0-7803-4985-7 section 4 | 4-6, 10-12 | |
| A | * abstract * | 1,7 | |

TECHNICAL FIELDS
SEARCHED    (IPC)

H04L
H04B

-/--

The present search report has been drawn up for all claims

| Place of search | Date of completion of the search | Examiner |
|---|---|---|
| The Hague | 19 January 2006 | Faber, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

15

**European Patent Office**

**EUROPEAN SEARCH REPORT**

Application Number

EP 05 01 7839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BARHUMI, I.; LEUS, G.: "Optimal training design for MIMO OFDM systems in mobile wireless channels" IEEE TRANSACTIONS ON SIGNAL PROCESSING, IEEE SERVICE CENTER, NEW YORK, NY, US, vol. 51, no. 6, June 2003 (2003-06), pages 1615-1624, XP002284029 ISSN: 1053-587X section 4.A * abstract; figure 1 * ----- | 1-3,7-9 | |
| A | COLERI, S. ET AL: "Channel Estimation Techniques Based on Pilot Arrangement in OFDM Systems" IEEE TRANSACTIONS ON BROADCASTING, IEEE INC., NEW YORK, US, vol. 48, no. 3, September 2002 (2002-09), pages 223-229, XP002344335 ISSN: 0018-9316 sections 4,5 * abstract; figures 2,3 * ----- | 1,4,7,10 | |
| A | WON GI JEON ET AL: "An efficient channel estimation technique for OFDM systems with transmitter diversity" THE 11TH IEEE INTERNATIONAL SYMPOSIUM ON PERSONAL, INDOOR AND MOBILE RADIO COMMUNICATIONS (PIMRC 2000), PISCATAWAY, NJ, USA, IEEE, vol. 2, 18 September 2000 (2000-09-18), pages 1246-1250, XP010520831 ISBN: 0-7803-6463-5 section 3 * abstract; figure 1 * ----- -/-- | 1,5-7, 11,12 | TECHNICAL FIELDS SEARCHED (IPC) |

The present search report has been drawn up for all claims

| Place of search | Date of completion of the search | Examiner |
|---|---|---|
| The Hague | 19 January 2006 | Faber, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 01 7839

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/072254 A1 (MA, JIANGLEI ET AL) 17 April 2003 (2003-04-17) * abstract; figures 2,5 * * page 1, paragraph 13 - page 3, paragraph 40 * ----- | 1,4,7,10 | |
| P,A | WO 2005/048497 A (ELECTRONICS AND TELECOM. RESEARCH INSTITUTE; SAMSUNG ELECTRONICS) 26 May 2005 (2005-05-26) * abstract; figures 2,3 * * page 10, paragraph 50 - page 11, paragraph 59 * ----- | 1,7 | |

TECHNICAL FIELDS
SEARCHED        (IPC)

The present search report has been drawn up for all claims

| Place of search | Date of completion of the search | Examiner |
|---|---|---|
| The Hague | 19 January 2006 | Faber, T |

## ANNEX TO THE EUROPEAN SEARCH REPORT
## ON EUROPEAN PATENT APPLICATION NO.

EP 05 01 7839

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2006

| Patent document cited in search report | | Publication date | Patent family member(s) | | Publication date |
|---|---|---|---|---|---|
| US 2003072254 | A1 | 17-04-2003 | WO<br>CN<br>EP | 03034644 A1<br>1605172 A<br>1442549 A1 | 24-04-2003<br>06-04-2005<br>04-08-2004 |
| WO 2005048497 | A | 26-05-2005 | NONE | | |

For more details about this annex : see Official Journal of the European Patent Office, No. 12/82

EPO FORM P0459